# EUROPÄISCHE PATENTSCHRIFT

(11) **EP 0 911 193 B1**
(45) Veröffentlichungstag und Bekanntmachung des Hinweises auf die Patenterteilung: **17.12.2003**
(21) Anmeldenummer: 98250374.0
(22) Anmeldetag: 23.10.1998
(51) Int. Cl.: B60C 27/14

(54) **Gleitschutzvorrichtung**
Anti-slip device
Dispositif antidérapage

(30) Priorität: 24.10.1997 DE 19748942
(43) Veröffentlichungstag der Anmeldung: 28.04.1999
(73) Patentinhaber: RUD-KETTENFABRIK RIEGER & DIETZ GMBH U. CO., 73432 Aalen-Unterkochen (DE)
(72) Erfinder: Kaiser, Helmut, 73432 Aalen-Unterkochen (DE); Liesch, Eugen, 73432 Aalen-Waldhausen (DE)
(74) Vertreter: Böning, Manfred, Prof.Dr.-Ing.

(56) Entgegenhaltungen:
- CH-A- 676 827
- FR-A- 2 217 174

## Beschreibung

Die Erfindung betrifft eine Gleitschutzvorrichtung für Fahrzeugräder mit einer am Fahrzeugrad befestigbaren und im montierten Zustand gegenüber diesem drehbaren Halterung für im montierten Zustand im Bereich der Reifenflanke zu liegen kommende Enden von Haltebügeln für ein Laufnetz, das aus zwei in Reifenumfangsrichtung auf der Reifenlauffläche verlaufenden, durchgehenden Kettensträngen und diese im Abstand voneinander haltenden Distanzstücken besteht.

Eine gattungsgemässe Gleitschutzvorrichtung der vorstehenden Art ist aus der EP 0 298 906 bekannt. Bei der bekannten Gleitschutzvorrichtung sind die aus einem Kunststoff bestehenden Haltebügel mit beiden, zur Erzielung einwandfreier Spurführungseigenschaften beidseits der Laufflächenmitte des Reifens angeordneten Kettensträngen verbunden. Die Haltebügel erfüllen in diesem Fall neben ihrer Halterungsfunktion noch Zusatzfunktionen, indem sie einerseits als Träger für von Stollen und Spikes gebildete Greifelemente dienen und andererseits bei trockener Fahrbahn die Haftreibung zwischen Rad und Fahrbahn fördern. Aufgrund der beschriebenen Ausgestaltung eignet sich die bekannte Gleitschutzvorrichtung in besonderem Maße für Einsätze in Gegenden, in denen mit stark wechselnden Fahrbahnbeschaffenheiten gerechnet werden muß. Die Vielseitigkeit der bekannten Konstruktion hat ihren nicht zuletzt durch einen vergleichsweise komplizierten Aufbau der Haltebügel bedingten Preis.

In Fällen, in denen ein Fahrzeugführer nur oder zumindest überwiegend mit verschneiten Straßen konfrontiert wird, spielen Probleme wie Haftreibungsbedingungen und ruhiger Lauf auf trockenen Fahrbahnabschnitten ebenso wie die Griffigkeit auf eisiger Fahrbahn eine weniger bedeutsame Rolle, hier sind vielmehr neben einer ausreichenden Spurführung gute Vortriebseigenschaften gefragt. Eine Gleitschutzvorrichtung, die bezüglich ihrer Vortriebseigenschaften hohen Anforderungen genügt, ist aus der DE 35 45 529 bekannt. Bei dieser Gleitschutzvorrichtung werden die Distanzstücke von senkrecht zur Reifenlauffläche angeordneten Querstegen gebildet, deren gabelförmige Enden mit parallel zur Lauffläche orientierten Gliedern von Kettenstrangabschnitten verbunden sind, wobei die Enden der Kettenstrangabschnitte in aus Rundmaterial bestehende Haltebügel eingehängt und im eingehängten Zustand durch eine Schließlasche gesichert sind. Die zweite bekannte Gleitschutzvorrichtung vermag insofern nicht voll zu befriedigen, als die Kettenstrangabschnitte im Bereich der Haltebügel im wesentlichen V-förmig aufeinander zulaufen und dadurch die Spurführungseigenschaften des Laufnetzes negativ beeinflußt werden.

Der Erfindung liegt die Aufgabe zugrunde, eine Gleitschutzvorrichtung der zuerst genannten Art derart umzugestalten, daß sie sich kostengünstiger herstellen läßt und insbesondere zum Einsatz in dauernd verschneiten Gebieten geeignet ist. Diese Aufgabe wird bei einer gattungsgemäßen Gleitschutzvorrichtung erfindungsgemäß dadurch gelöst, daß die Haltebügel lediglich mit dem der Außenseite des Fahrzeugrades zugewandten Kettenstrang verbunden sind.

Der erfindungsgemäßen Gleitschutzvorrichtung liegt die Überlegung zugrunde, daß der Umfang des von den nebeneinander liegenden Kettensträngen und den Distanzstücken gebildeten Laufnetzes einen den Reifen nach Art einer Strickleiter umschließenden Mantel bildet, der sich nur unwesentlich von der Reifenlauffläche abheben kann. Der Erfinder macht sich den vorstehenden Umstand zunutze, indem er auf die bisher geübte Praxis der Verbindung der Haltebügel mit beiden Kettensträngen verzichtet. Dadurch, daß die Haltebügel anders als bei den bekannten Konstruktionen nicht in das Laufnetz integriert sind, läßt sich letzteres leicht von den Haltebügeln trennen. Die Möglichkeit einer derartigen Trennung erleichtert nicht nur das Wiederaufarbeiten des Laufnetzes, sondern erweist sich auch insoweit als vorteilhaft, als das Laufnetz auf einfache Art und Weise gewendet werden kann. Hinzu kommt, daß die problemlose Trennbarkeit des aus Stahlteilen bestehenden Laufnetzes von den Haltebügeln bei Verwendung von Haltebügeln aus Kunststoff sich günstig beim Recyceln von unbrauchbar gewordenen Gleitschutzvorrichtungen auswirkt.

Weitere Einzelheiten und Merkmale der Erfindung ergeben sich aus den Unteransprüchen und der nachstehenden Beschreibung mehrerer in der beigefügten Zeichnung dargestellter Ausführungsbeispiele. Es zeigen
Fig. 1 die perspektivische Ansicht einer auf ein Fahrzeugrad montierten Gleitschutzvorrichtung,
Fig. 2 im vergrößerten Maßstab und in explosionsartiger Darstellung die Verbindung eines Haltebügels mit dem Laufnetz der Gleitschutzvorrichtung gemäß Fig. 1,
Fig. 3 einen Schnitt längs der Linie III-III in Fig. 2,
Fig. 4 eine der Fig. 2 entsprechende explosionsartige Darstellung einer modifizierten Ausführungsform und
Fig. 5 eine der Fig. 2 entsprechende explosionsartige Darstellung einer dritten Ausführungsform.

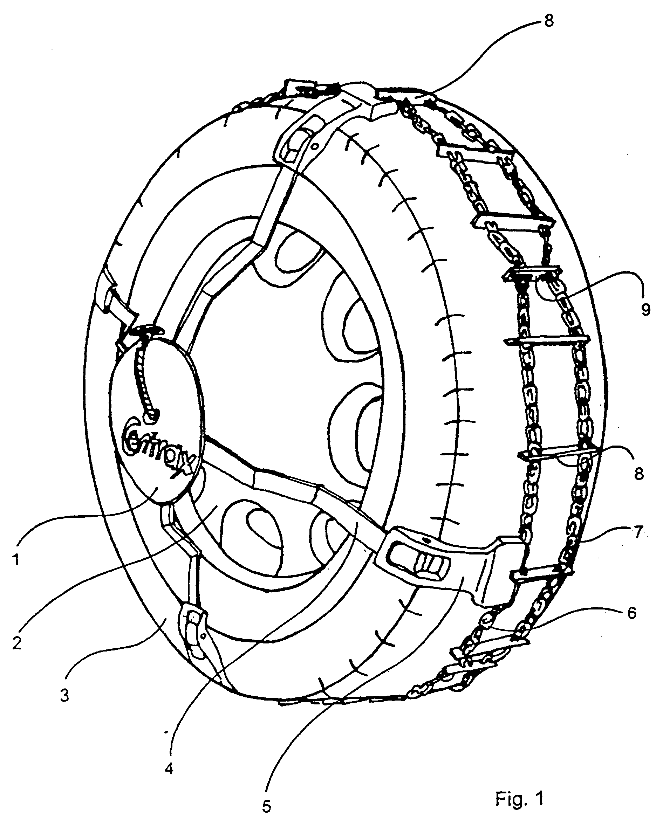

In Fig. 1 ist 1 eine Halterung, die so mit der Felge 2 eines Fahrzeugrades verbunden ist, daß sie gegenüber diesem eine Drehbewegung ausführen kann, um ein Wandern des von ihr gehaltenen Laufnetzes einer Gleitschutzvorrichtung auf der Lauffläche eines Reifens 3 zu ermöglichen. Zur Halterung 1 gehören Ausleger 4, an deren Enden schwenk- und um begrenzte Beträge auf- und abbewegbare Haltebügel 5 gelagert sind. Mit den den Auslegern 4 abgewandten Enden der Haltebügel 5 ist der der Außenseite des Fahrzeugrades zugewandte Kettenstrang 6 eines Laufnetzes verbunden, das einen weiteren Kettenstrang 7 und die beiden vorgenannten Kettenstränge im Abstand voneinander haltende Distanzstücke 8 und 9 aufweist. Die Kettenstränge 6,7 bestehen aus ovalen Rundstahlgliedern, die Distanzstücke 8,9 aus Stahl und die Haltebügel 5 aus Kunststoff, insbesondere Polyurethan.

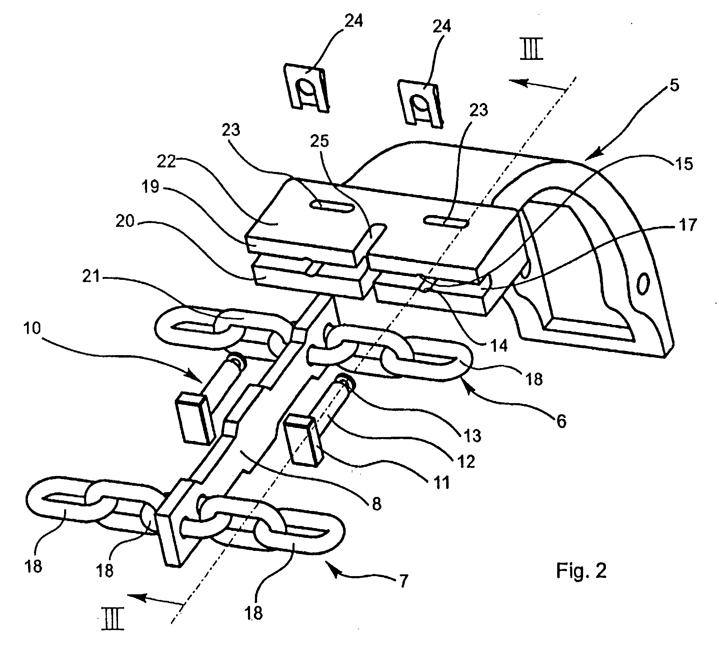

Fig. 2 zeigt in explosionsartiger Darstellung die zur Verbindung des Laufnetzes mit den Haltebügeln erforderlichen Teile. Man erkennt zwei im wesentlichen T-förmig ausgebildete Anschlußteile 10, die jeweils einen Kopf 11 und einen Zapfen 12 aufweisen, der an seinem dem Kopf 11 abgewandten Ende mit einer Ringnut 13 versehen ist. Die Zapfen 12 passen in von Mulden 14,15 und Bohrungen 16 gebildete Aufnahmen, wobei die Mulden 14,15 von Verlängerungen der Bohrungen 16 in den Bereich einer Führungsnut 17 gebildet werden, in die Teile jeweils eines Längsschenkels von parallel zur Reifenlauffläche orientierten Gliedern 18 des Kettenstranges 6 passen. Ober- und unterhalb der Führungsnut 17 befinden sich Stützflächen 19,20 für vertikal zur Reifenlauffläche orientierte Glieder 21 des Kettenstranges 6.

Im Bereich der Ringnuten 13 der in das Kopfstück 22 gesteckten Anschlußteile 10 ist das Kopfstück 22 der Haltebügel 5 mit senkrecht zu den Bohrungen 16 stehenden Schlitzen 23 versehen, in die Clips 24 einführbar sind, die zur Verankerung der Anschlußteile 10 im Kopfstück 22 dienen.

Im zusammengebauten Zustand ragt das dem Kopfstück 22 des Haltebügels 5 zugewandte Ende des Distanzstückes 8 in einen Führungsschlitz 25 des Kopfstückes 22.

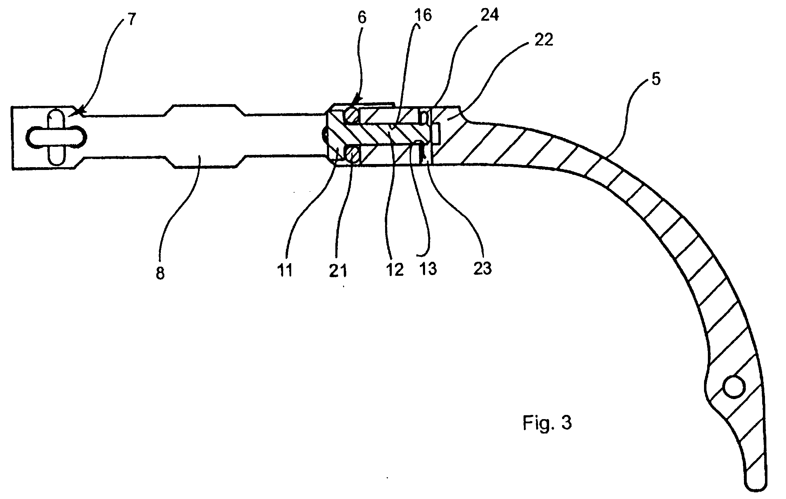

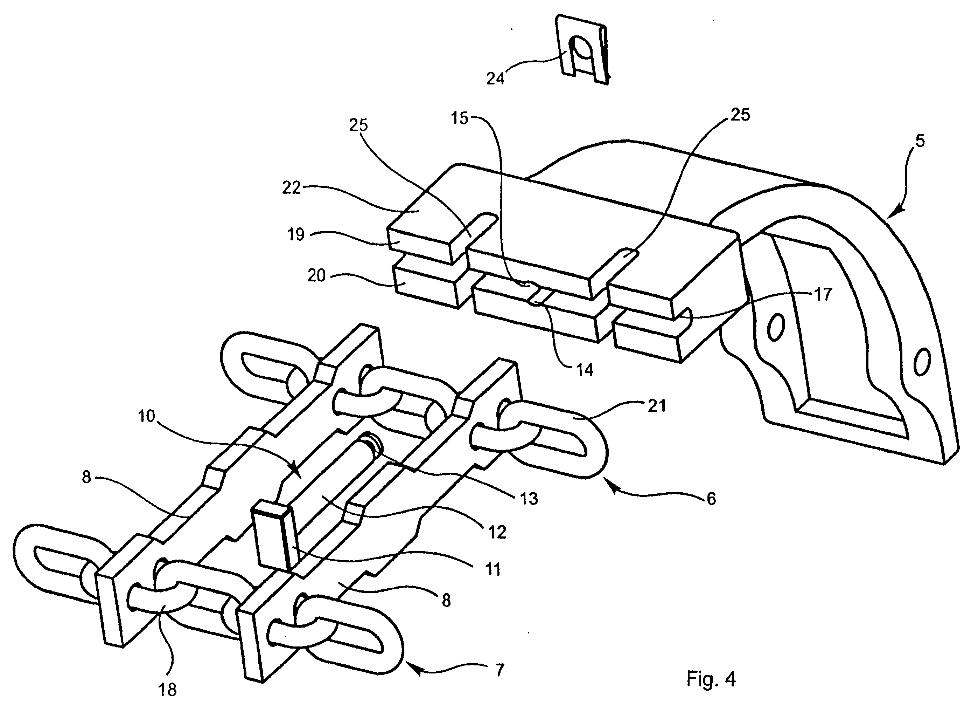

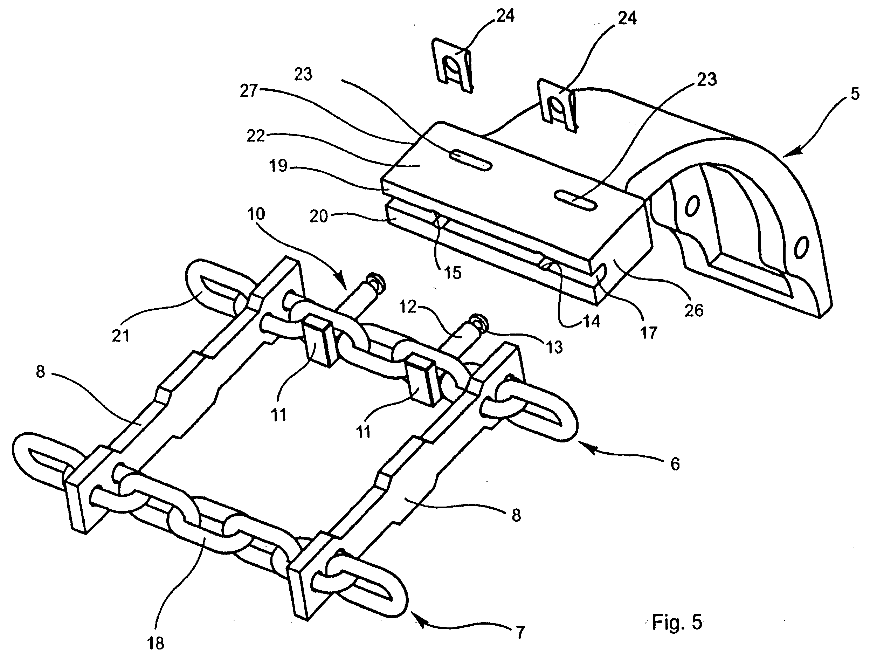

Anstatt wie bei der Ausführungsform gemäß Fig. 1 bis 3 mit jedem Haltebügel 5 nur ein Distanzstück 8 zu verbinden, ist es auch möglich, jedem Haltebügel 5 jeweils zwei Distanzstükke 8 zuzuordnen. Eine erste entsprechende Lösung zeigt die Fig. 4, eine zweite die Fig. 5. In beiden Figuren wurden den Teilen der Figuren 1 bis 3 entsprechende Teile mit den gleichen Bezugsziffern wie in den Figuren 1 bis 3 belegt.

Während im Falle der Fig. 4 zur Verbindung des Laufnetzes mit dem Haltebügel 5 lediglich ein Anschlußteil 10 verwendet wird, kommen bei der Lösung gemäß Fig. 5 zwei Anschlußteile 10 zum Einsatz. Um für letztere hinreichend Platz zu haben, ohne die Abmessungen des Kopfstückes 22 gegenüber der Ausführungsform gemäß Fig. 1 bis 3 vergrößern zu müssen, liegen die Distanzstücke 8 mit ihren Enden im montierten Zustand nur mit einer Seite gegen die sich gegenüberliegenden Seitenflächen 26,27 des Kopfstückes 22 an.

## Patentansprüche

1. Gleitschutzvorrichtung für Fahrzeugräder mit einer am Fahrzeugrad befestigbaren und im montierten Zustand gegenüber diesem drehbaren Halterung (1) für im montierten Zustand im Bereich der Reifenflanke zu liegen kommende Enden von Haltebügeln (5) für ein Laufnetz, das aus zwei in Reifenumfangsrichtung auf der Reifenlauffläche verlaufenden, durchgehenden Kettensträngen (6,7) und diese im Abstand voneinander haltenden Distanzstücken (8,9) besteht, **dadurch gekennzeichnet, daß** die Haltebügel (5) lediglich mit dem der Außenseite des Fahrzeugrades zugewandten Kettenstrang (6) verbunden sind.

2. Gleitschutzvorrichtung nach Anspruch 1, **dadurch gekennzeichnet, daß** die Verbindungen zwischen den Haltebügeln (5) und dem Kettenstrang (6) als Steckverbindungen ausgebildet sind.

3. Gleitschutzvorrichtung nach Anspruch 1 oder 2, **dadurch gekennzeichnet, daß** die Haltebügel (5) mit Stützflächen (19,20) für die Längsschenkel von senkrecht zur Reifenlauffläche orientierten ovalen Gliedern (21) des mit ihnen verbundenen Kettenstranges (6) versehen sind.

4. Gleitschutzvorrichtung nach einem oder mehreren der Ansprüche 1 bis 3, **dadurch gekennzeichnet, daß** die Haltebügel (5) mit mindestens einer Führungsnut (17) für ihnen jeweils zugewandte Längsschenkel von parallel zur Reifenlauffläche orientierten Gliedern (18) des mit ihnen verbundenen Kettenstranges (6) versehen sind.

5. Gleitschutzvorrichtung nach einem oder mehreren der Ansprüche 1 bis 4, **dadurch gekennzeichnet, daß** die Distanzstükke (8) von Stahlstegen gebildet werden, deren sich gegenüberliegende Enden die Längsschenkel parallel zur Reifenlauffläche orientierter Glieder der Kettenstränge (6,7) umfassen.

6. Gleitschutzvorrichtung nach einem oder mehreren der Ansprüche 1 bis 5, **dadurch gekennzeichnet, daß** zur Verbindung der Haltebügel (5) mit dem Kettenstrang (6) Anschlußteile (10) dienen, die jeweils einen gegen die Längsschenkel eines senkrecht zur Lauffläche des Reifens orientierten Kettengliedes (21) zur Anlage kommenden Kopf (11) aufweisen.

7. Gleitschutzvorrichtung nach Anspruch 6, **dadurch gekennzeichnet, daß** die Anschlußteile (10) im wesentlichen T-förmig ausgebildet sind.

8. Gleitschutzvorrichtung nach Anspruch 6 oder 7, **dadurch gekennzeichnet, daß** die Anschlußteile (10) durch den lichten Innenraum von senkrecht zur Reifenlauffläche orientierten Gliedern (21) des Kettenstranges (6) in Aufnahmen (14-16) der Haltebügel (5) steckbare Zapfen (12) aufweisen.

9. Gleitschutzvorrichtung nach Anspruch 8, **dadurch gekennzeichnet, daß** die Zapfen (12) gegen ein Herausziehen aus den Aufnahmen (14-16) gesichert sind.

10. Gleitschutzvorrichtung nach Anspruch 9, **dadurch gekennzeichnet, daß** zur Lagesicherung der Zapfen (12) Clips (24) dienen.

11. Gleitschutzvorrichtung nach Anspruch 10, **dadurch gekennzeichnet, daß** die Haltebügel (5) mit senkrecht zu den Zapfen (12) der Anschlußteile (10) stehenden Einführschlitzen (23) für die Clips (24) versehen sind.

12. Gleitschutzvorrichtung nach einem der Ansprüche 7 bis 11, **dadurch gekennzeichnet, daß** der Kopf (11) eines jeden T-förmigen Anschlußteiles (10) die Längsschenkel des den Zapfen (12) des Anschlußteiles umschließenden Kettengliedes (21) gegen die ihm zugewandte Stützfläche (19,20) des Haltebügels (5) drückt .

13. Gleitschutzvorrichtung nach einem oder mehreren der Ansprüche 1 bis 12, **dadurch gekennzeichnet, daß** die Haltebügel (5) aus Kunststoff, insbesondere Polyurethan bestehen.

14. Gleitschutzvorrichtung nach einem oder mehreren der Ansprüche 1 bis 13, **dadurch gekennzeichnet, daß** mindestens ein Teil der Haltebügel (5) mit jeweils mindestens einem Führungsschlitz (25) für jeweils ein Ende eines stegförmigen Distanzstückes (8) versehen ist.

15. Gleitschutzvorrichtung nach einem oder mehreren der Ansprüche 1 bis 14, **dadurch gekennzeichnet, daß** die durch Distanzstücke (8,9) im Abstand voneinander gehaltenen Kettenstränge (6,7) beidseits der Laufflächenmitte angeordnet sind.

## Claims

1. Anti-slip device for vehicle wheels, with a holding means (1), fastenable to the vehicle wheel and rotatable relative to the latter in the mounted state, for ends, coming to lie in the region of the tyre flank in the mounted state, of holding straps (5) for a running net which consists of two continuous chain strands (6, 7) running in the tyre circumferential direction on the tyre tread and of spacer pieces (8, 9) holding the said chain strands at a distance from one another, **characterized in that** the holding straps (5) are connected only to the chain strand (6) facing the outside of the vehicle wheel.

2. Anti-slip device according to Claim 1, **characterized in that** the connections between the holding straps (5) and the chain strand (6) are designed as plug connections.

3. Anti-slip device according to Claim 1 or 2, **characterized in that** the holding straps (5) are provided with supporting surfaces (19, 20) for the longitudinal legs of oval links (21), oriented perpendicularly to the tyre tread, of the chain strand (6) connected to the said holding straps.

4. Anti-slip device according to one or more of Claims 1 to 3, **characterized in that** the holding straps (5) are provided with at least one guide groove (17) for longitudinal legs, facing them in each case, of links (18), oriented parallel to the tyre tread, of the chain strand (6) connected to the said holding straps.

5. Anti-slip device according to one or more of Claims 1 to 4, **characterized in that** the spacer pieces (8) are formed by steel webs, of which the ends located opposite one another surround the longitudinal legs of links, oriented parallel to the tyre tread, of the chain strands (6, 7).

6. Anti-slip device according to one or more of Claims 1 to 5, **characterized in that** connection parts (10) serve for connecting the holding straps (5) to the chain strand (6), the said connection parts having in each case a head (11) coming to bear against the longitudinal legs of a chain link (21) oriented perpendicularly to the tread of the tyre.

7. Anti-slip device according to Claim 6, **characterized in that** the connection parts (10) are of essentially T-shaped design.

8. Anti-slip device according to Claim 6 or 7, **characterized in that** the connection parts (10) have tenons (12) capable of being plugged through the clear inner space of links (21), oriented perpendicularly to the tyre tread, of the chain strand (6) into receptacles (14-16) of the holding straps (5).

9. Anti-slip device according to Claim 8, **characterized in that** the tenons (12) are secured against being pulled out of the receptacles (14-16).

10. Anti-slip device according to Claim 9, **characterized in that** clips (24) serve for securing the tenons (12) in position.

11. Anti-slip device according to Claim 10, **characterized in that** the holding straps (5) are provided with introduction slots (23) for the clips (24), the said introduction slots being perpendicular to the tenons (12) of the connection parts (10).

12. Anti-slip device according to one of Claims 7 to 11, **characterized in that** the head (11) of each T-shaped connection part (10) presses the longitudinal legs of the chain link (21) surrounding the tenon (12) of the connection part against that supporting surface (19, 20) of the holding strap (5) which faces the said chain link.

13. Anti-slip device according to one or more of Claims 1 to 12, **characterized in that** the holding straps (5) consist of plastic, in particular polyurethane.

14. Anti-slip device according to one or more of Claims 1 to 13, **characterized in that** at least some of the holding straps (5) are provided in each case with at least one guide slot (25) for one end of a web-shaped spacer piece (8) in each case.

15. Anti-slip device according to one or more of Claims 1 to 14, **characterized in that** the chain strands (6, 7) held at a distance from one another by spacer pieces (8, 9) are arranged on both sides of the tread centre.

## Revendications

1. Dispositif anti-dérapant pour roues de véhicule avec une fixation (1) qui peut être fixée à la roue du véhicule et qui peut tourner par rapport à la roue une fois montée la fixation étant prévue pour les extrémités des étriers de maintien (5) situées dans la zone des flancs de pneus pour un filet de roulement qui se compose de deux chaînes (6, 7) continues passant sur la bande de roulement des pneus sur toute la circonférence des pneus et de pièces intercalaires (8, 9) tenant celles-ci à distance l'une de l'autre, **caractérisé en ce que** les étriers de maintien (5) sont reliés uniquement à la chaîne (6) tournée vers le côté extérieur de la roue du véhicule.

2. Dispositif anti-dérapant selon la revendication 1, **caractérisé en ce que** les liaisons entre les étriers de maintien (5) et la chaîne (6) sont réalisées comme des fiches de raccordement.

3. Dispositif anti-dérapant selon la revendication 1 ou 2, **caractérisé en ce que** les étriers de maintien (5) sont équipés de surfaces d'appui (19, 20) pour les branches longitudinales de maillons (21) ovales de la chaîne (6) à laquelle ils sont reliés, orientés perpendiculairement aux bandes de roulement des pneus.

4. Dispositif anti-dérapant selon une ou plusieurs des revendications 1 à 3, **caractérisé en ce que** les étriers de maintien (5) sont équipés au moins d'une rainure de guidage ( 17) pour les branches longitudinales dirigées chaque fois vers eux des maillons (18) de la chaîne (6) à laquelle ils sont reliés orientés parallèlement à la bande de roulement du pneu.

5. Dispositif anti-dérapant selon une ou plusieurs des revendications 1 à 4, **caractérisé en ce que** les pièces intercalaires (8) sont formées de traverses d'acier dont les extrémités opposées enveloppent les branches longitudinales des maillons des chaînes (6, 7) orientés parallèlement à la bande de roulement du pneu.

6. Dispositif anti-dérapant selon une ou plusieurs des revendications 1 à 5, **caractérisé en ce que** pour relier l'étrier de maintien (5) à la chaîne (6) on se sert de pièces d'attache (10) qui comportent chaque fois une tête (11) prenant appui contre la branche longitudinale d'un maillon de chaîne (21) orienté perpendiculairement à la bande de roulement du pneu.

7. Dispositif anti-dérapant selon la revendication 6, **caractérisé en ce que** les pièces d'attache (10) sont pour l'essentiel réalisées en forme de T.

8. Dispositif anti-dérapant selon la revendication 6 ou 7, **caractérisé en ce que** les pièces d'attache (10) comprennent des tourillons enfichables (12) à travers l'espace intérieur libre des maillons de la chaîne (6) orientés perpendiculairement à la bande de roulement du pneu (21) dans des logements (14, 16) de l'étrier de maintien (5).

9. Dispositif anti-dérapant selon la revendication 8, **caractérisé en ce que** les tourillons (12) sont protégés contre un retrait des logements (14, 16).

10. Dispositif anti-dérapant selon la revendication 9, **caractérisé en ce que** des clips (24) sont utilisés pour la sécurisation de la position des tourillons (12).

11. Dispositif anti-dérapant selon la revendication 10, **caractérisé en ce que** les étriers de maintien (5) sont équipés de fentes d'insertion (23) placées perpendiculairement aux tourillons (12) des pièces d'attache (10) pour les clips (24).

12. Dispositif anti-dérapant selon l'une des revendications 7 à 11, **caractérisé en ce que** la tête (11) de chaque pièce d'attache en forme de T (10) presse la branche longitudinale du maillon de chaîne (21) enfermant le tourillon (12) de la pièce d'attache contre la surface d'appui (19, 20) de l'étrier de maintien (5) tournée vers elle.

13. Dispositif anti-dérapant selon une ou plusieurs des revendications 1 à 12, **caractérisé en ce que** les étriers de maintien (5) sont en matière plastique, en particulier en polyuréthane.

14. Dispositif anti-dérapant selon une ou plusieurs des revendications 1 à 13, **caractérisé en ce qu'**au moins une pièce de l'étrier de maintien (5) est équipée avec chaque fois d'au moins une fente de guidage (25) pour chaque fois une extrémité d'une pièce intercalaire en forme de traverse (8).

15. Dispositif anti-dérapant selon une ou plusieurs des revendications 1 à 14, **caractérisé en ce que** les chaînes (6, 7) tenues à distance l'une de l'autre par des pièces intercalaires (8, 9) sont disposées des deux côtés du centre de la bande de roulement.
